# EUROPÄISCHE PATENTSCHRIFT

(11) **EP 2 208 436 B1**
(45) Veröffentlichungstag und Bekanntmachung des Hinweises auf die Patenterteilung: **31.08.2016**
(21) Anmeldenummer: 09011577.5
(22) Anmeldetag: 10.09.2009
(51) Int. Cl.: A47B 77/08

(54) **Höhenverstellung für Heizplatte**
Height adjustment for heating plate
Réglage en hauteur pour plaque chauffante

(30) Priorität: 26.09.2008 DE 102008050877
(43) Veröffentlichungstag der Anmeldung: 21.07.2010
(73) Patentinhaber: Rieber GmbH & Co. KG, 72770 Reutlingen (DE)
(72) Erfinder: Maier, Max, 72636 Ludwigsburg (DE)
(74) Vertreter: Schumacher & Willsau

(56) Entgegenhaltungen:
- EP-A1- 0 395 575
- DE-U- 7 119 775
- DE-U1- 9 402 481
- FR-A1- 2 614 514
- US-A- 3 997 028

## Beschreibung

Die Erfindung betrifft eine Einrichtung der im Oberbegriff des Patentanspruches 1 angegebenen Art.

Der Oberbegriff des Anspruchs 1 basiert auf einem Stand der Technik nach dem Dokument DE 94 02 481 U1. Dieses Dokument zeigt einen Tisch mit einer Tischplatte mit einer beweglichen Aufnahmeplatte und mit einer Kühleinrichtung, die unter der Mitte der Tischplatte angeordnet und mit dem Tisch verbunden ist. Die Aufnahmeplatte ist in der Kühleinrichtung auf- und abbewegbar. Dafür ist eine Bewegungsschraube vorhanden, die durch einen Motor antreibbar und ihrerseits mit gegenläufigen Gewinden zu beiden Seiten versehen ist. Gleitelemente sind mit der Bewegungsschraube jeweils über ein Gewinde gekuppelt und in Abhängigkeit von der Rotationsrichtung der Bewegungsschraube nach links und rechts bewegbar, wodurch ihr Abstand geringer oder größer wird. Die Gleitelemente sind über Verbindungselemente mit der beweglichen Aufnahmeplatte verbunden. Dieser bekannte Tisch hat nicht lediglich die Funktion, Gegenstände aufzunehmen, die zu einer Mahlzeit erforderlich sind, sondern er erfüllt zusätzlich die Funktion einer Kühleinrichtung, aus der für die Mahlzeiten benötigte Gerichte direkt am Tisch entnommen und anschließend wieder in der Kühleinrichtung gelagert werden können. Dieser bekannte Tisch ist nicht für das Zubereiten und/oder Ausgeben von Speisen eingerichtet und auch nicht für den Einsatz von Speisenbehältern im Gastronormformat hergerichtet..

Bekannte Einrichtungen zum Zubereiten und/oder Ausgeben von Speisen sind beispielsweise sogenannte Büfettwagen, die mehrere Ausnehmungen zum Aufnehmen jeweils eines Speisenbehälters im Gastronormformat aufweisen.

Die Ausnehmungen können beispielsweise ein Wasserbecken aufweisen, in dem dann Wasser erwärmt wird, um die Speisen im Speisenbehälter warmzuhalten. Eine Zubereitung von Speisen ist an solchen Ausgabebüfetts nicht möglich.

Mit der Erfindung soll eine Einrichtung zum Zubereiten und/oder Ausgeben von Speisen bereitgestellt werden, die bei einfacherem Aufbau flexibler einsetzbar ist.

Erfindungsgemäß ist hierzu eine Einrichtung nach dem Oberbegriff des Anspruchs 1 mit den im kennzeichnenden Teil des Anspruchs 1 angegebenen Merkmalen versehen.

Die erfindungsgemäße Kombination eines Elektromotors mit einer Rutschkupplung ermöglicht eine sehr einfache Ausgestaltung der Antriebseinrichtung, da dann das durch den Elektromotor und die Rutschkupplung aufgebrachte Drehmoment so eingestellt werden kann, dass die Verschlussplatte im nicht belegten Zustand in die Verschlussstellung bewegt wird, nach Belegung mit einem Speisenbehälter aber in die Versenkstellung bewegt wird, da die vom Speisenbehälter aufgebrachte Gewichtskraft größer ist als die mittels des Drehmoments der Rutschkupplung aufgebrachte Kraft auf die Verschlussplatte nach oben. In der Versenkstellung sorgt die Rutschkupplung dann automatisch dafür, dass die Verschlussplatte, die beispielsweise eine Heizplatte ist, immer in Anlage mit der Unterseite des Speisenbehälters bleibt. Der Elektromotor kann hierzu permanent drehend ausgebildet sein. In der Verschlussstellung kann aber beispielsweise vorgesehen sein, die Rutschkupplung zu sperren, um dadurch die Verschlussplatte in der Verschlussstellung arretieren zu können. Als Rutschkupplung kann beispielsweise auch eine Magnetkupplung eingesetzt werden.

Da mittels der Verschlussplatte die Ausnehmung verschließbar ist, kann die erfindungsgemäße Einrichtung zum Zubereiten und/oder Ausgeben von Speisen flexibel eingesetzt werden. Beispielsweise können auf der Tischplatte bei verschlossenen Ausnehmungen Speisenbehälter, Gläser, Getränke oder dergleichen angeordnet werden, ohne dass befürchtet werden muss, dass Gegenstände in die Ausnehmungen hineinfallen. Beispielsweise können bei verschlossener Ausnehmung auch Speisen zubereitet werden, beispielsweise kann Gemüse geschnitten werden und dergleichen. Wenn sich die Verschlussplatten in der Versenkstellung befinden, sind die Ausnehmungen freigegeben und beispielsweise kann ein Speisenbehälter im Gastronörmformat eingesetzt werden. Auf diese Weise steht dann ein Ausgabemöbel zur Verfügung, in dem die Speisenbehälter gegen Verrutschen oder Verschieben gesichert aufgenommen sind. Beispielsweise kann aber auch in die geöffnete Ausnehmung ein Heizeinsatz eingesetzt werden, um Speisen auf dem Heizeinsatz garen zu können. Dadurch, dass die Verschlussplatte in eine Versenkstellung bewegt werden kann, ist es möglich, dass ein in die Ausnehmung eingesetzter Speisenbehälter im Wesentlichen bündig mit der Tischplatte abschließt. Beispielsweise kann die Verschlussplatte soweit abgesenkt werden, bis der Speisenbehälter sicher mit seinem umlaufenden Rand auf der Tischplatte aufliegt und dadurch sowohl in vertikaler Richtung als auch seitlich zuverlässig fixiert ist.

In Weiterbildung der Erfindung ist eine Oberseite der Verschlussplatte in Verschlussstellung bündig zu einer Oberseite der Tischplatte angeordnet.

Auf diese Weise erhält man in der Verschlussstellung eine lediglich durch schmale Fugen unterbrochene Tischplatte, die vielfältig genutzt werden kann.

In Weiterbildung der Erfindung ist die Antriebseinrichtung ausgebildet, um die Verschlussplatte in der Versenkstellung in Anlage mit einer Unterseite eines in die Ausnehmung in der Tischplatte eingesetzten Speisenbehälters zu halten. Vorteilhafterweise ist die Verschlussplatte als Heiz- oder Kühlplatte ausgebildet.

Auf diese Weise wird ein verlustarmer Energieübergang von der Verschlussplatte in den Speisenbehälter und umgekehrt sichergestellt. Bei einer Ausbildung der Verschlussplatte als Heizplatte können dadurch Speisen im Speisenbehälter warmgehalten oder auch noch gegart werden. Auch bei einer Ausbildung der Verschlussplatte als Kühlplatte kann ein verlustarmer Wärmeübergang sichergestellt werden. Idealerweise ist der Speisenbehälter in der Versenkstellung der Verschlussplatte mit seiner Oberseite annähernd bündig mit der Tischplatte, indem ein umlaufender Rand des Speisenbehälters auf der Tischplatte aufliegt. Dennoch wird die Verschlussplatte, die beispielsweise eine Heizeinrichtung aufweist, mittels der Antriebseinrichtung zuverlässig in Anlage mit der Unterseite des Speisenbehälters gehalten. Die Antriebseinrichtung kann dabei so ausgebildet sein, dass Speisenbehälter mit unterschiedlicher Tiefe eingesetzt werden können und dennoch selbsttätig die Verschlussplatte in Anlage an der Unterseite des Speisenbehälters gehalten wird.

In Weiterbildung der Erfindung ist die Antriebseinrichtung ausgebildet, um die Verschlussplatte im nicht belegten Zustand automatisch in die Verschlussstellung zu bewegen und um die Verschlussplatte in mit einem Speisenbehälter oder sonstigem Einsatzteil belegten Zustand in die Versenkstellung zu bewegen.

Auf diese Weise wird die Bedienung der erfindungsgemäßen Einrichtung erleichtert, da ein Bediener lediglich einen Speisenbehälter in die Ausnehmung einsetzen oder wieder entnehmen muss. Die Verschlussplatte gibt nach dem Aufsetzen des Speisenbehälters die Ausnehmung automatisch frei und hält dann auch die Verschlussplatte zuverlässig in Anlage mit der Unterseite des Speisenbehälters. Ohne dass ein Bediener daher Einstellungen vornehmen muss, wird ein verlustarmer Energieübergang von der Verschlussplatte, die beispielsweise als Heizplatte ausgebildet ist, zu dem Speisenbehälter sichergestellt. Es kann aber beispielsweise auch vorgesehen sein, die Antriebseinrichtung in der Verschlussstellung zu sperren, um dann auch schwere Gegenstände auf den Verschlussplatten abstellen und die Einrichtung dann beispielsweise als Tisch nutzen zu können.

In Weiterbildung der Erfindung sind wenigstens zwei seitlich zur Verschlussplatte angeordnete Führungsschienen vorgesehen.

Mittels solcher Führungsschienen kann, beispielsweise unabhängig von der Antriebseinheit, eine Führung der Verschlussplatte realisiert werden. Eine Führung der Verschlussplatte erfolgt dadurch in horizontaler Richtung, so dass sich die Verschlussplatte ausschließlich vertikal und im Wesentlichen ausschließlich mit ihrer Oberseite exakt horizontal ausgerichtet bewegen kann. Für die Führungen können alle sinnvollen Materialpaarungen verwendet werden, beispielsweise Metall/Metall, Metall/Kunststoff oder dergleichen.

In Weiterbildung der Erfindung weist die Antriebsvorrichtung wenigstens einen mit der Verschlussplatte verbundenen Seilzug auf.

Mittels eines Seilzugs lässt sich sowohl die Verschlussplatte bewegen als auch bei geeigneter Ausbildung führen. Beispielsweise werden vier miteinander gekoppelte Seilzüge verwendet, die jeweils im Bereich einer Ecke der Verschlussplatte angreifen. Der Seilzug oder mehrere Seilzüge können mittels des Elektromotors angetrieben werden. Der Seilzug weist vorteilhafterweise ein umlaufendes Seil auf, so dass die Verschlussplatte am Seil selbst befestigt wird und wenigstens eine Umlenkrolle fest an dem Tisch angeordnet wird. Auf diese Weise kann dann sowohl eine Aufwärtsbewegung als auch eine Abwärtsbewegung der Verschlussplatte kontrolliert und mittels einer Zugkraft im Seil bewirkt werden.

In Weiterbildung der Erfindung weist die Antriebseinrichtung wenigstens einen Linearmotor auf.

Ein Linearmotor kann sowohl für den Antrieb der Verschlussplatte als auch für deren Führung verwendet werden. Beispielsweise wird eine vom Linearmotor aufgebrachte Kraft überwacht, um eine automatische Absenkung der Verschlussplatte bei Belegung mit einem Speisenbehälter zu gewährleisten. Es ist beispielsweise aber auch möglich, einen Näherungssensor anzuordnen, um eine Belegung der Verschlussplatte feststellen zu können.

In Weiterbildung der Erfindung weist die Antriebseinrichtung eine Hebelanordnung auf.

Die Hebelanordnung kann sowohl für einen Antrieb als auch für eine Führung der Verschlussplatte herangezogen werden. Beispielsweise können Kniehebel oder Scherenhebel verwendet werden, um die gewünschte Bewegung der Verschlussplatte realisieren zu können. Eine besonders einfache Anordnung ergibt sich, wenn ein mittig drehbarer Hebel einerseits mit der Verschlussplatte und andererseits mit einem Gewicht belastet ist, das dem Gewicht der Verschlussplatte zuzüglich dem Gewicht eines aufsetzbaren Speisenbehälters entspricht. Wird auch ein nur gering befüllter Speisenbehälter auf die Verschlussplatte aufgesetzt, so wird sich diese in die Versenkstellung bewegen aber stets in Anlage an der Unterseite des Speisenbehälters bleiben. Eine zusätzliche mechanische Sperre des Hebels in der Verschlussstellung kann sinnvoll sein.

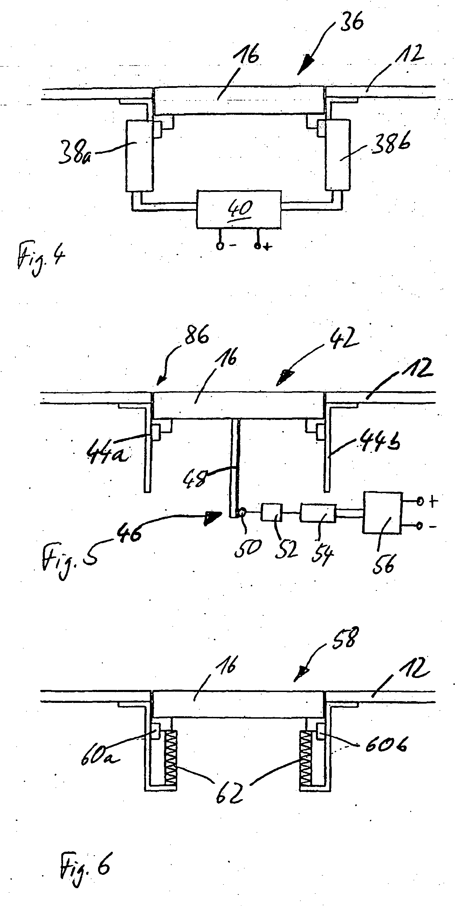

Weitere Merkmale und Vorteile der Erfindung ergeben sich aus den Ansprüchen und der folgenden Beschreibung von einigen Ausführungsformen der Einrichtung im Zusammenhang mit den Zeichnungen. Einzelmerkmale von einigen dargestellten Ausführungsformen lassen sich dabei im Rahmen der Erfindung in vorteilhafter Weise mit einer Einrichtung nach der Erfindung kombinieren, von der eine bevorzugte Ausführungsform in Fig. 5 gezeigt ist.. In den Zeichnungen zeigen:
Fig. 1 eine schematische Schnittansicht einer ersten Ausführungsform, die nicht Gegenstand der Erfindung ist,
Fig. 2 die Einrichtung der Fig. 1 mit einem Speisenbehälter,
Fig. 3 die Einrichtung der Fig. 1 mit einem Speisenbehälter und einem Heizeinsatz,
Fig. 4 eine schematische Schnittansicht einer zweiten Ausführungsform, die nicht Gegenstand der Erfindung ist,
Fig. 5 eine schematische Schnittansicht einer dritten Ausführungsform, welche die bevorzugte Ausführungsform der Einrichtung nach der Erfindung ist,
Fig. 6 eine schematische Schnittansicht einer vierten Ausführungsform, die nicht Gegenstand der Erfindung ist,
Fig. 7 eine schematische Schnittansicht einer fünften Ausführungsform, die nicht Gegenstand der Erfindung ist,
Fig. 8 eine schematische Schnittansicht einer sechsten Ausführungsform, die nicht Gegenstand der Erfindung ist
Fig. 9 eine schematische Schnittansicht einer siebten Ausführungsform, die nicht Gegenstand der Erfindung ist,
Fig. 10 eine schematische Schnittansicht einer achten Ausführungsform, die nicht Gegenstand der Erfindung ist,
Fig. 11 eine schematische Schnittansicht einer neunten Ausführungsform, die nicht Gegenstand der Erfindung ist, und
Fig. 12 eine Draufsicht auf eine zehnte Ausführungsform , die nicht Gegenstand der Erfindung ist..

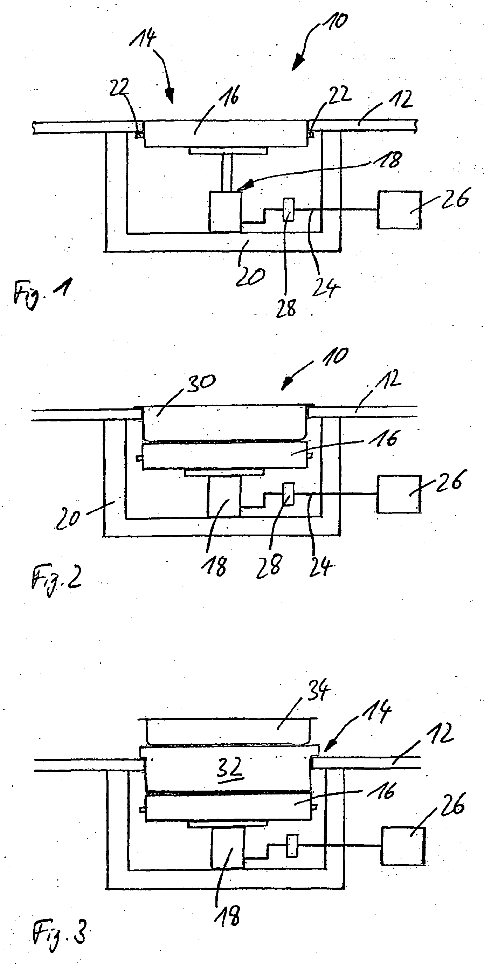

In der Darstellung der Fig. 1 ist schematisch als eine erste Ausführungsform eine Einrichtung 10 zum Zubereiten und/oder Ausgeben von Speisen dargestellt. Die Einrichtung 1 a weist eine Tischplatte 12 auf, die mit einer Ausnehmung 14 versehen ist. In der Ausnehmung 14 ist eine Verschlussplatte 16 angeordnet, die sich in Fig. 1 in einer Verschlussstellung befindet, in der die Oberseite der Verschlussplatte 16 mit der Oberseite der Tischplatte 12 fluchtet. In der Verschlussstellung der Fig. 1 liegt somit eine durchgehende Tischfläche vor, die vielfältig genutzt werden kann, beispielsweise zum Abstellen von Gläsern, Tellern, Besteck oder auch zum Anrichten eines konventionellen. Büffets.

Die Verschlussplatte 16 wird mittels einer Kolben-Zylinder-Einheit 18 in der Verschlussstellung gehalten. Eine Kolbenstange der Kolben-Zylinder-Einheit 18 ist mit der Unterseite der Verschlussplatte 16 verbunden und ein Zylinder der Kolben-Zylinder-Einheit 18 sitzt auf einem U-artigen Rahmen 20 auf, der fest mit der Tischplatte 12 verbunden ist. Mittels der Kolben-Zylinder-Einheit 18 kann die Verschlussplatte 16 in die in Fig. 1 dargestellte Verschlussstellung bewegt werden und auch gegenüber der Tischplatte 12 abgesenkt werden, so dass die Ausnehmung 14 freigegeben wird. Die Verschlussplatte 16 ist mit seitlichen Anschlägen 22 versehen, die an der Unterseite der Tischplatte 12 angreifen. Sobald die Anschläge 22 an der Unterseite der Tischplatte 12 anliegen, ist die Oberseite der Verschlussplatte 16 bündig mit der Oberseite der Tischplatte 12. Die Kolben-Zylinder-Einheit 18 kann die Verschlussplatte 16 also nicht weiter nach oben drücken als bis in die in Fig. 1 dargestellte Verschlussstellung.

Die Kolben-Zylinder-Einheit 18 ist mittels einer Druckleitung 24 mit einem Druckspeicher 26 verbunden. Zwischen Druckspeicher 26 und Kolben-Zylinder-Einheit 18 ist in der Druckleitung 24 ein Überdruckventil 28 angeordnet. Das Überdruckventil 28 kann beispielsweise mechanisch sperrbar sein, um unabhängig von einer auf der Verschlussplatte 16 lastenden und nach unten gerichteten Kraft sicherzustellen, dass die Verschlussplatte 16 mit ihrer Oberseite bündig zur Tischplatte 12 bleibt. Das Überdruckventil 28 ist im nicht gesperrten Zustand so ausgebildet, dass es bei Überschreiten einer bestimmten, auf die Verschlussplatte 16 nach unten wirkenden Gewichtskraft eine Verbindung zum Druckspeicher 26 freigibt und dadurch die Verschlussplatte 16 nach unten absinken kann. Das Überdruckventil 28 kann hierzu beispielsweise so ausgebildet sein, dass die Gewichtskraft eines aufgesetzten Speisenbehälters 30, wie er in Fig. 2 dargestellt ist, ausreicht, um die Verschlussplatte 16 nach unten in ihre Versenkstellung zu bewegen.

In der Darstellung der Fig. 2 befindet sich die Verschlussplatte 16 in ihrer Versenkstellung und es ist gut zu erkennen, dass die Verschlussplatte 16 in dieser Versenkstellung flächig an der Unterseite des Speisenbehälters 30 anliegt. Der Speisenbehälter 30 wiederum ist mit seiner Oberseite annähernd bündig mit der Tischplatte 12 angeordnet und liegt lediglich mit einem umlaufenden Rand auf der Tischplatte 12 auf. Der Speisenbehälter 30 ist dadurch zuverlässig gehalten und Speisen können im Speisenbehälter 30 zubereitet oder bewegt werden, ohne dass ein Verrutschen des Speisenbehälters 30 zu befürchten wäre.

Die Kolben-Zylinder-Einheit 18 und der Druckspeicher 26 wirken zusammen als hydraulische Feder. Beispielsweise kann der Druckspeicher 26 mit einem elastischen Abschnitt versehen sein oder der Druckspeicher 26 kann einen Gasraum und einen Flüssigkeitsraum enthalten, die mittels einer elastischen Membran getrennt sind. Die Flüssigkeit befindet sich dann auch in der Druckleitung 24 und im Zylinderraum der Kolben-Zylinder-Einheit 18. In der eingeschobenen Stellung der Fig. 2 wird von der Kolben-Zylinder-Einheit 18 daher Flüssigkeit in den Druckspeicher 26 gedrückt und verschiebt dort die elastische Membran, wodurch das Gas im Druckspeicher 26 komprimiert wird. Sobald der Speisenbehälter 30 wieder von der Verschlussplatte 16 abgenommen wird, kann sich das Gas im Druckspeicher 26 entspannen und die Verschlussplatte 16 wird ausgehend von ihrer Versenkstellung gemäß Fig. 2 wieder in die Verschlussstellung gemäß Fig. 1 bewegt.

Die Verschlussplatte 16 kann beispielsweise als Heizplatte ausgebildet sein, so dass Speisen im Speisenbehälter 30 zubereitet oder warmgehalten werden können. Alternativ kann die Verschlussplatte 16 auch als Kühlplatte ausgebildet sein.

Es ist zu erkennen, dass die Kolben-Zylinder-Einheit 18 etwa mittig an einer Unterseite der Verschlussplatte 16 angreift und sowohl deren Antrieb als auch deren Führung bewirkt. Die Verschlussplatte 16 kann sich dadurch ausschließlich in der dargestellten horizontalen Lage zwischen der Verschlussstellung gemäß Fig. 1 und einer Versenkstellung gemäß Fig. 2 bewegen. Wird anstelle der Speisenbehälters 30 ein Speisenbehälter mit geringerer Tiefe eingesetzt, so nimmt die Verschlussplatte 16 eine gegenüber der Fig. 2 nach oben verschobene Versenkstellung ein, in der sie ebenfalls mit ihrer Oberseite flächig an der Unterseite des Speisenbehälters 30 anliegt.

Die Darstellung der Fig. 3 zeigt die Einrichtung 10 der Fig. 1, wobei sich die Verschlussplatte 16 in der Versenkstellung befindet. Auf der Verschlussplatte 16 ruht ein Heizeinsatz 32, der in die Ausnehmung 14 in der Tischplatte 12 eingesetzt wurde. Auf dem Heizeinsatz 32 ist ein Speisenbehälter 34 angeordnet. Der Heizeinsatz 32 kann nun dazu verwendet werden, Speisen in dem Speisenbehälter 34 warmzuhalten oder zuzubereiten. Der Heizeinsatz 32 kann aber beispielsweise auch als Grillplatte ausgebildet sein, um ummittelbar auf seiner Oberfläche Speisen zu grillen.

Die Darstellung der Fig. 4 zeigt schematisch als eine zweite Ausführungsform eine Einrichtung 36, bei der die Verschlussplatte 16 mittels zweier Linearmotoren 38a, 38b sowohl geführt als auch von der in Fig. 4 dargestellten Verschlussstellung in eine Versenkstellung und umgekehrt bewegt werden kann. Die Linearmotoren 38a, 38b werden mittels einer Steuereinheit 40 angesteuert. Die Steuereinheit 40 kann Strom und Spannung für die Linearmotoren 38a, 38b überwachen und daraus beispielsweise eine von den Linearmotoren aufgebrachte Kraft auf die Verschlussplatte 16 bestimmen. Die von den Linearmotoren 38a,38b aufgebrachte Kraft wird dann so bemessen, dass die Verschlussplatte 16 im unbelegten Zustand in der in Fig. 4 dargestellten Verschlussstellung verbleibt. Wird ein Speisenbehälter auf die Verschlussplatte 16 aufgesetzt, so sinkt die Verschlussplatte 16 automatisch in eine Versenkstellung ab, in der sie mit ihrer Oberseite aber noch flächig an der Unterseite des Speisenbehälters anliegt, der Speisenbehälter aber mit seinem umlaufenden Rand auf der Tischplatte 12 aufliegt. Anstelle einer Kraftüberwachung der Linearmotoren 38a, 38b kann beispielsweise auch in der Verschlussplatte 16 ein Näherungssensor vorgesehen sein, der eine Belegung mit einem Speisenbehälter erkennt. Sobald ein Speisenbehälter dann auf die Verschlussplatte 16 aufgesetzt wird, sinkt diese in die Versenkstellung ab, wobei das Signal des Näherungssensors weiter dazu verwendet wird, die Verschlussplatte 16 in Anlage an der Unterseite des Speisenbehälters zu halten. Die Verschlussplatte 16 kann selbstverständlich als Heizplatte oder Kühlplatte ausgebildet sein.

Eine dritte Ausführungsform ist als die bevorzugte Ausführungsform der erfindungsgemäßen Einrichtung 42 schematisch in der Fig. 5 dargestellt. Die Verschlussplatte 16 wird hier mittels insgesamt vier Führungen in horizontaler Richtung geführt, so dass sie sich lediglich exakt senkrecht zur Tischplatte 12 bewegen kann, wobei lediglich zwei Führungen 44a, 44b in der Darstellung der Fig. 5 erkennbar sind. Ein Antrieb der Verschlussplatte 16 wird mittels einer Antriebseinrichtung 46 bewirkt, die eine mit der Verschlussplatte 16 verbundene Zahnstange 48, ein mit der Zahnstange 48 kämmendes Ritzel 50, eine Rutschkupplung 52, einen Elektromotor 54 und eine Steuereinheit 56 zum Ansteuern des Elektromotors 54 aufweist. Die Rutschkupplung 52 befindet sich im Antriebsstrang zwischen der Welle des Elektromotors 54 und dem Ritzel 50. Die Rutschkupplung 52 kann als mechanische Rutschkupplung, beispielsweise aber auch als Magnetkupplung ausgebildet sein. Ein von der Rutschkupplung 52 aufgebrachtes Drehmoment ist so bemessen, dass die Verschlussplatte 16 im unbelegten Zustand in der in Fig. 5 dargestellten Verschlussstellung gehalten wird. Sobald die Verschlussplatte 16 mit einem Speisenbehälter oder einem sonstigen Einsatzteil belegt wird, übersteigt das mittels der Zahnstange 48 und dem Ritzel 50 auf die Rutschkupplung 52 aufgebrachte Drehmoment deren Haltemoment und die Verschlussplatte 16 kann in ihre Versenkstellung absinken. Das Haltemoment der Rutschkupplung ist dann aber noch ausreichend groß, um die Verschlussplatte 16 zuverlässig in Anlage an der Unterseite des Speisenbehälters zu halten. Während sich die Verschlussplatte 16 in der Versenkstellung befindet, kann der Elektromotor 54 sich beispielsweise permanent drehen. Befindet sich die Verschlussplatte 16 in der Verschlussstellung der Fig. 5, kann vorgesehen sein, die Rutschkupplung 52, das Ritzel 50 oder die Zahnstange 48 mechanisch zu sperren, so dass der Elektromotor 54 abgeschaltet werden kann.

Die Darstellung der Fig. 6 zeigt als eine vierte Ausführungsform eine Einrichtung 58. Die Verschlussplatte 16 wird hier mittels Führungen 60a, 60b geführt, so dass sie sich lediglich in der dargestellten, zur Tischplatte 12 parallelen Stellung nach oben bzw. unten bewegen kann. Angetrieben wird die Verschlussplatte 16 bei der Einrichtung 58 mittels zweier Druckfedern 62. Die Federkraft der Druckfedern 62 ist dabei so bemessen, dass die Verschlussplatte 16 im nicht belegten Zustand der Fig. 6 in die dargestellte Verschlussstellung bewegt wird, in der ihre Oberseite bündig zur Oberseite der Tischplatte 12 ist. Wird ein Speisenbehälter auf die Verschlussplatte 16 abgesetzt, übersteigt die gemeinsame Gewichtskraft von Speisenbehälter und Verschlussplatte 16 die Federkraft der Druckfedern 62 und die Verschlussplatte 16 kann in die Versenkstellung absinken, wird dabei aber gleichzeitig zuverlässig in Anlage an der Unterseite des Speisenbehälters gehalten.

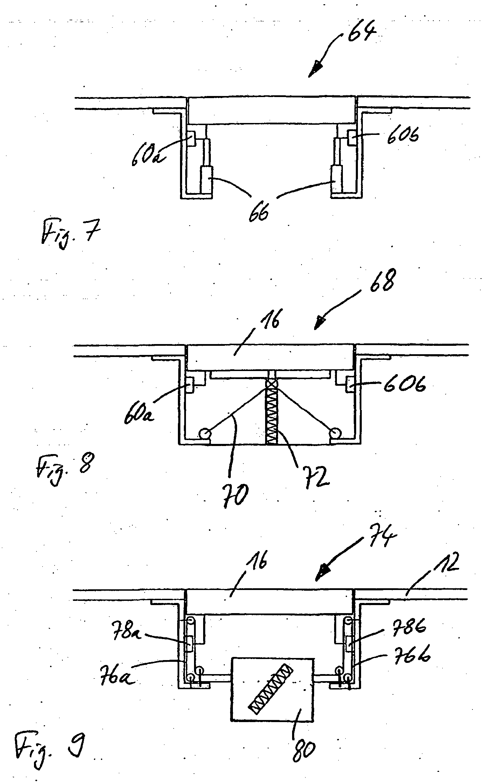

Die Darstellung der Fig. 7 zeigt als eine fünfte Ausführungsform eine Einrichtung 64, bei der im Unterschied zur Einrichtung 58 der Fig. 6 die Druckfedern 62 durch Pneumatik- oder Hydraulikzylinder 66 ersetzt wurden.

Die Darstellung der Fig. 8 zeigt als eine sechste Ausführungsform eine Einrichtung 68. Die Verschlussplatte 16 der Einrichtung 68 ist mittels der Führungen 60a, 60b geführt, die bereits anhand der Fig. 6 erläutert wurden. Für den Antrieb der Verschlussplatte 16 ist eine Hebelanordnung 70 vorgesehen, die mittels einer Druckfeder 72 beaufschlagt wird.

Die Darstellung der Fig. 9 zeigt als eine siebte Ausführungsform eine Einrichtung 74. Ein Antrieb und eine Führung der Verschlussplatte 16 wird hier mittels insgesamt vier Seilzügen bewirkt, von denen lediglich zwei Seilzüge 76a, 76b dargestellt sind. Die Seilzüge 76a, 76b bewegen ein Führungsstück 78a bzw. 78b, das jeweils starr mit der Verschlussplatte 16 verbunden ist. Die Seilzüge 76a, 76b weisen jeweils drei relativ zur Tischplatte 12 fixierte Umlenkrollen auf. Die Seilzüge 76a, 76b laufen in einen lediglich schematisch dargestellten Antrieb 80 hinein, in dem Federn für einen Antrieb sorgen. Dies ist durch die schematische Darstellung einer Feder im Antrieb 80 dargestellt. Beispielsweise ist eine federbetriebene Antriebsrolle vorgesehen, mit der die Seilzüge 76a, 76b angetrieben werden. Die Seilzüge 76a, 76b weisen dabei ein umlaufendes Seil auf, so dass die Führungsstücke 78a, 78b zusammen mit der Verschlussplatte 16 sowohl bei einer Bewegung nach oben als auch nach unten gezogen werden können.

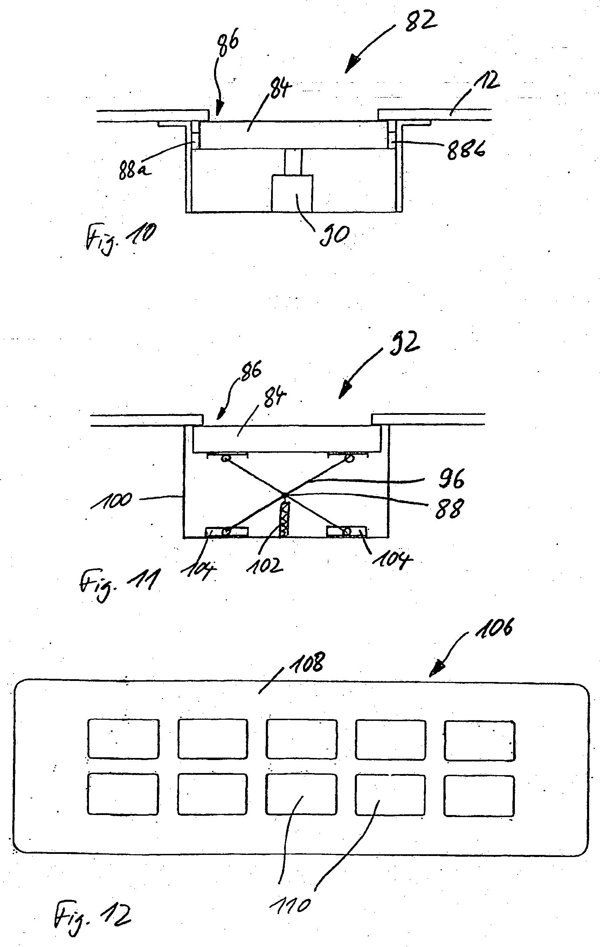

Die Darstellung der Fig. 10 zeigt als eine achte Ausführungsform eine Einrichtung 82. Eine als Heizplatte ausgebildete Verschlussplatte 84 ist in Fig. 10 in ihrer Verschlussstellung gezeigt, in der sie mit ihrer Oberseite an der Unterseite der Tischplatte 12 anliegt, und zwar lediglich an den Seiten benachbart zu den Bereichen der Unterseite der Tischplatte 12, die an eine Ausnehmung 86 in der Tischplatte 12 angrenzen. Die Verschlussplatte 84 wird mittels Führungen 88a, 88b geführt und mittels einer Kolben-Zylinder-Einheit 90 angetrieben. Ausgehend von der in Fig. 10 dargestellten Verschlussstellung, in der die Ausnehmung 86 durch die Verschlussplatte 84 verschlossen ist, kann die Verschlussplatte 84 nach unten in eine Versenkstellung bewegt werden. Wird ein Speisenbehälter in die Ausnehmung 86 eingesetzt, wird die Verschlussplatte 84 in ihre Versenkstellung bewegt, in der sie mit ihrer Oberseite an der Unterseite des Speisenbehälters anliegt. Von der als Heizplatte ausgebildeten Verschlussplatte 84 auf den Speisenbehälter ist dadurch eine verlustarme Energieübertragung möglich. Die Dicke der Tischplatte 12 kann auf flache, pfannenartige Speisenbehälter abgestimmt sein, so dass die Verschlussplatte 16 in der in Fig. 10 gezeigten Verschlussstellung an der Unterseite des Speisenbehälters anliegt und dieser dennoch lediglich mit seinem umlaufenden Rand über die Tischplatte 12 hinausragt.

Die Darstellung der Fig. 11 zeigt als eine neunte Ausführungsform eine Einrichtung 92. Die Verschlussplatte 84 ist in Fig. 11 in ihrer Verschlussstellung dargestellt. Die Verschlussplatte 84 wird mittels einer Scherenhebelanordnung 96 geführt und in vertikaler Richtung bewegt. Die Scherenhebelanordnung 96 weist zwei miteinander gelenkig verbundene Hebel auf, wobei an dem Gelenkpunkt 88 eine Druckfeder angreift. Die jeweiligen freien Enden der Hebelanordnung 96 laufen mit Rollen auf geeigneten Bahnen an der Unterseite der Verschlussplatte 84 bzw. am Boden einer Wanne 100, die an die Ausnehmung 86 anschließt. Die Druckfeder 102 drückt den Gelenkpunkt 88 nach oben, wodurch auch die Verschlussplatte 84 in ihre in Fig. 11 dargestellte Verschlussstellung vorgespannt wird. Wird die Verschlussplatte 84 mit einem Speisenbehälter belegt, übersteigt die gemeinsame Gewichtskraft von Verschlussplatte 84 und Speisenbehälter die Druckkraft der Druckfeder 102 und die Verschlussplatte 84 wird in ihre Versenkstellung abgesenkt. Die am Boden der Wanne 100 laufenden Rollen an den freien Enden der Hebel der Hebelanordnung 96 sind gegen Abheben in Führungen 104 gesichert.

Die Darstellung der Fig. 12 zeigt in einer Ansicht von oben als eine zehnte Ausführungsform eine Einrichtung 106. Die Einrichtung 106 weist eine Tischplatte 108 auf, in der insgesamt zehn rechteckförmige Ausnehmungen 110 vorgesehen sind. Diese Ausnehmungen 110 sind mittels Verschlussplatten verschlossen, die ausgehend von einer mit der Oberseite der Tischplatte 108 fluchtenden Stellung in eine Versenkstellung abgesenkt werden können. Die Verschlussplatten sind jeweils als Heizplatten ausgebildet, so dass die Einrichtung 106 als Büffettisch verwendet werden kann, an dem Speisen sowohl ausgegeben, warmgehalten aber auch zubereitet werden können. In der Verschlussstellung der Verschlussplatten sind die Ausnehmungen 110 verschlossen und die Einrichtung 106 kann als gewöhnlicher Tisch verwendet werden, beispielsweise zum Aufbau eines konventionellen Büffets oder auch als Konferenztisch.

## Patentansprüche

1. Einrichtung (42) zum Zubereiten und/oder Ausgeben von Speisen, mit einer Tischplatte (12), wobei die Tischplatte (12) wenigstens eine Ausnehmung (86) zum Aufnehmen jeweils eines Speisenbehälters (30, 34) im Gastronormformat oder sonstigen Einsatzteils aufweist, wobei wenigstens eine Verschlussplatte (16) zum Verschließen jeweils einer Ausnehmung (86) in der Tischplatte (12), wobei die Verschlussplatte (16) senkrecht zur Tischplatte (12) beweglich angeordnet ist, und eine Antriebseinrichtung (46) für die Verschlussplatte (16) vorgesehen sind, um die Verschlussplatte (16) wahlweise in eine die Ausnehmung (86) in der Tischplatte (12) verschließende Verschlussstellung oder in eine die Ausnehmung freigebende Versenkstellung zu bewegen, **dadurch gekennzeichnet, dass** die Antriebseinrichtung (46) wenigstens einen Elektromotor (54) und eine Rutschkupplung (52) aufweist.

2. Einrichtung nach Anspruch 1, **dadurch gekennzeichnet, dass** eine Oberseite der Verschlussplatte (16) in der Verschlussstellung bündig zu einer Oberseite der Tischplatte (12) angeordnet ist.

3. Einrichtung nach Anspruch 1 oder 2, **dadurch gekennzeichnet, dass** die Antriebseinrichtung (46) ausgebildet ist, um die Verschlussplatte (16) in der Versenkstellung in Anlage mit einer Unterseite eines in die Ausnehmung in der Tischplatte (12) eingesetzten Speisenbehälters (30) zu halten.

4. Einrichtung nach wenigstens einem der vorstehenden Ansprüche, **dadurch gekennzeichnet, dass** die Verschlussplatte (16) als Heiz- oder Kühlplatte ausgebildet ist.

5. Einrichtung nach wenigstens einem der vorstehenden Ansprüche, **dadurch gekennzeichnet, dass** die Antriebseinrichtung (46) ausgebildet ist, um die Verschlussplatte (16) im nicht belegten Zustand automatisch in die Verschlussstellung zu bewegen und um die Verschlussplatte (16) im mit einem Speisenbehälter (30) oder sonstigen Einsatzteil belegten Zustand in die Versenkstellung zu bewegen.

6. Einrichtung nach wenigstens einem der vorstehenden Ansprüche, **dadurch gekennzeichnet, dass** wenigstens zwei seitlich zur Verschlussplatte (16) angeordnete Führungsschienen (44a, 44b) vorgesehen sind.

7. Einrichtung nach wenigstens einem der vorstehenden Ansprüche, **dadurch gekennzeichnet, dass** die Antriebseinrichtung (46) wenigstens einen mit der Verschlussplatte (16) verbundenen Seilzug (76a, 76b) aufweist.

8. Einrichtung nach einem der vorstehenden Ansprüche, **dadurch gekennzeichnet, dass** die Antriebseinrichtung (46) wenigstens einen Linearmotor (38a, 38b) aufweist.

9. Einrichtung nach wenigstens einem der vorstehenden Ansprüche, **dadurch gekennzeichnet, dass** die Antriebseinrichtung (46) eine Hebelanordnung (96) aufweist.

## Claims

1. Arrangement (42) for preparing and/or serving of food having a table board (12), the table board (12) having at least one recess (86), each being capable of receiving a food container (30, 34) having gastronorm format or of any other insert member, wherein at least one closing board (16) for closing each recess (86) in the table board (12) is provided, wherein the closing board (16) is positioned in a perpendicularly movable fashion with respect to the table board (12), and wherein a driving means (46) for the closing board (16) is provided for moving the closing board (16) selectively into a closing position that closes the recess (86) in the table board (12), or into a sunk position for releasing the recess, **characterized in that** the driving means (46) having at least one electric motor (54) and a friction clutch (52).

2. Arrangement according to claim 1, **characterized in that**, in the closing position, an upper surface of the closing board (16) is positioned flush with respect to an upper surface of the table board (12).

3. Arrangement according to claim 1 or 2, **characterized in that** the driving means (46) is configured for, in the sunk position, maintaining the closing board (16) in contact with a lower surface of a food container (30) that is inserted into the recess in the table board (12).

4. Arrangement according to any of the preceding claims, **characterized in that** the closing board (16) is configured as a heating or cooling board.

5. Arrangement according to any of the preceding claims, **characterized in that** the driving means (46) is configured for automatically moving the closing board (16), in a non-occupied state, into the closing position, and for moving the closing plate (16), in a state of being occupied with a food container (30) or with any other insert member, into the sunk position.

6. Arrangement according to any of the preceding claims, **characterized in that** at least two guiding rails (44a, 44b) are provided that are laterally arranged with respect to the closing board (16).

7. Arrangement according to any of the preceding claims, **characterized in that** the driving means (46) having at least one wire rope (76a, 76b) being connected with the closing board (16).

8. Arrangement according to any of the preceding claims, **characterized in that** the driving means (46) comprises at least one linear motor (38a, 38b).

9. Arrangement according to any of the preceding claims, **characterized in that** the driving means (46) comprises a lever arrangement (96).

## Revendications

1. Dispositif (42) pour préparer et/ou délivrer des aliments, comprenant un plan de travail (12), le plan de travail (12) présentant au moins un évidement (86) pour recevoir à chaque fois un récipient pour aliments (30, 34) au format Gastronorm ou une autre pièce d'insertion, au moins une plaque de fermeture (16) étant prévue pour fermer à chaque fois un évidement (86) dans le plan de travail (12), la plaque de fermeture (16) étant disposée de manière déplaçable perpendiculairement au plan de travail (12) et un dispositif d'entraînement (46) étant prévu pour la plaque de fermeture (16), afin de déplacer la plaque de fermeture (16) de manière sélective dans une position de fermeture fermant l'évidement (86) dans le plan de travail (12) ou dans une position abaissée libérant l'évidement, **caractérisé en ce que** le dispositif d'entraînement (46) présente au moins un moteur électrique (54) et un accouplement à glissement (52).

2. Dispositif selon la revendication 1, **caractérisé en ce qu'**un côté supérieur de la plaque de fermeture (16) est disposé dans la position de fermeture en affleurement avec un côté supérieur du plan de travail (12).

3. Dispositif selon la revendication 1 ou 2, **caractérisé en ce que** le dispositif d'entraînement (46) est réalisé de manière à retenir la plaque de fermeture (16) dans la position abaissée en appui contre un côté inférieur d'un récipient pour aliments (30) inséré dans l'évidement dans le plan de travail (12).

4. Dispositif selon au moins l'une quelconque des revendications précédentes, **caractérisé en ce que** la plaque de fermeture (16) est réalisée sous forme de plaque chauffante ou de plaque de refroidissement.

5. Dispositif selon au moins l'une quelconque des revendications précédentes, **caractérisé en ce que** le dispositif d'entraînement (46) est réalisé de manière à déplacer automatiquement la plaque de fermeture (16) dans la position de fermeture, dans l'état non occupé, et de manière à déplacer la plaque de fermeture (16) dans la position abaissée, dans l'état occupé par un récipient pour aliments (30) ou une autre pièce d'insertion.

6. Dispositif selon au moins l'une quelconque des revendications précédentes, **caractérisé en ce qu'**au moins deux rails de guidage (44a, 44b) disposés latéralement par rapport à la plaque de fermeture (16) sont prévus.

7. Dispositif selon au moins l'une quelconque des revendications précédentes, **caractérisé en ce que** le dispositif d'entraînement (46) présente au moins un câble Bowden (76a, 76b) connecté à la plaque de fermeture (16).

8. Dispositif selon l'une quelconque des revendications précédentes, **caractérisé en ce que** le dispositif d'entraînement (46) présente au moins un moteur linéaire (38a, 38b).

9. Dispositif selon au moins l'une quelconque des revendications précédentes, **caractérisé en ce que** le dispositif d'entraînement (46) présente un agencement à levier (96).
